# DEMANDE DE BREVET EUROPEEN

(11) **EP 2 354 500 A1**
(43) Date de publication de la demande: **10.08.2011**
(21) Numéro de dépôt: 10306375.6
(22) Date de dépôt: 08.12.2010
(51) Int. Cl.: F02D 23/00, F01N 3/20, F02B 37/18

(54) **Procédé de pilotage d'une vanne de court-circuitage d'une turbine d'un moteur à combustion interne**

(30) Priorité: 13.01.2010 FR 1000121
(71) Demandeur: Renault s.a.s., 92100 Boulogne-Billancourt (FR)
(72) Inventeur: Bourret, Stéphane, Corbreuse 91410 (FR); Thouvenel, Nicolas, 91610 Ballancourt sur Essonne (FR)

(57) **Abrégé**

L'invention concerne un procédé de pilotage d'un moteur à combustion interne (1) qui comporte une turbine (32) suivie d'un convertisseur catalytique (33A), et une conduite de court-circuitage (35) de ladite turbine munie d'une vanne de régulation (36).

Selon l'invention, le procédé comporte des étapes consistant à :
a) établir un diagnostic de l'état de fonctionnement du convertisseur catalytique,
b) déduire dudit diagnostic une valeur d'amorçage d'une température à partir de laquelle ledit convertisseur Galactique est amorcé,
c) mesurer une valeur réelle de ladite température,
d) comparer ladite valeur réelle à ladite valeur d'amorçage, et
e) piloter l'ouverture et/ou la fermeture de ladite vanne de régulation en fonction du résultat de la comparaison effectuée à l'étape d).

## Description

### DOMAINE TECHNIQUE AUQUEL SE RAPPORTE L'INVENTION

La présente invention concerne de manière générale la réduction des émissions polluantes des moteurs à combustion interne.

Elle concerne plus particulièrement un procédé de pilotage d'un moteur à combustion interne.

Elle concerne également un moteur à combustion interne comportant une ligne d'échappement de gaz brûlés équipée d'une turbine suivie d'un convertisseur catalytique et, en parallèle de ladite turbine, d'une conduite de court-circuitage de ladite turbine munie d'une vanne de régulation du débit de gaz brûlés circulant dans ladite conduite de court-circuitage.

### ARRIERE-PLAN TECHNOLOGIQUE

On recherche actuellement, dans un cadre législatif toujours plus contraignant et dans un soucis de préservation de l'environnement, des solutions techniques permettant d'améliorer le fonctionnement des moteurs à combustion interne, notamment pour réduire le taux d'éléments polluants contenus dans les gaz brûlés émis par les moteurs dans l'atmosphère.

Pour réduire ces émissions polluantes, un moteur à combustion interne comporte généralement dans sa ligne d'échappement un convertisseur catalytique.

Ce convertisseur catalytique peut fonctionner de manière optimale sur une plage de températures comprise entre 150 et 250 degrés Celsius, Il présente en revanche des performances fortement réduites à température ambiante, juste après le démarrage du moteurs, En conséquence, la majeure partie des polluants rejetés dans l'atmosphère est émise dans les minutes qui suivent la phase de démarrage à froid du moteur.

Une solution pour améliorer l'efficacité du convertisseur catalytique consisterait alors à le dimensionner en fonction de son rendement à basses températures, en augmentant sa taille. Néanmoins, étant donné le prix élevé des matériaux précieux utilisés pour fabriquer un tel convertisseur catalytique, il est difficile de limiter le phénomène de rejets polluants par ce biais.

Une autre solution consiste à favoriser le réchauffement rapide du convertisseur catalytique au démarrage du moteur. Une telle solution est exposée dans le document FR 2 926 593, Elle consiste à prévoir, en parallèle de la turbine du moteur, une conduite de court-circuitage qui permet, au démarrage du moteur, de faire directement communiquer la sortie des cylindres du moteur avec l'entrée du convertisseur catalytique, pour éviter que les gaz brûlés entrant dans le convertisseur catalytique, n'aient été détendus et donc refroidis par la turbine.

Dans ce document, la turbine est court-circuitée jusqu'à temps que les gaz brûlés atteignent une température seuil. Au-delà de cette température seuil, la conduite de court-circuitage est fermée pour que le moteur entre dans un mode de fonctionnement normal.

Cette solution donne entière satisfaction lorsque le convertisseur catalytique est neuf. Toutefois, passé un certain âge, on constate que l'efficacité de cette solution diminue fortement. Plus précisément, il a été constaté que lorsque le convertisseur vieillissait, la conduite de court-circuitage se fermait prématurément, c'est-à-dire avant que le convertisseur catalytique, n'ait eu le temps de s'amorcer, ce qui avait pour conséquence de rallonger fortement la durée nécessaire à t'amorçage du convertisseur, au détriment des émissions polluantes du moteur.

### OBJET DE L'INVENTION

Afin de remédier à l'inconvénient précité de l'état de la technique, la présente invention propose un nouveau procédé de pilotage du moteur, conçu pour prendre en considération le vieillissement du convertisseur catalytique.

Plus particulièrement, on propose selon l'invention un procédé de pilotage d'un moteur à combustion interne comportant des étapes consistant à :
a) réaliser un diagnostic de l'état de fonctionnement dudit convertisseur catalytique,
b) déduire dudit diagnostic une valeur d'amorçage d'une température à partir de laquelle ledit convertisseur catalytique est amorcé,
c) mesurer une valeur réelle de ladite température,
d) comparer ladite valeur réelle à ladite valeur d'amorçage, et
e) piloter l'ouverture et/ou la fermeture de ladite vanne de régulation en
   fonction du résultat de la comparaison effectuée à l'étape d).

Au cours de ses travaux de recherche, la demanderesse a constaté que la température d'amorçage du convertisseur catalytique n'est pas une donnée constante, mais qu'elle varie en augmentant lorsque le convertisseur catalytique vieillit,

Grâce à l'invention, la valeur d'amorçage (à partir de laquelle la conduite de court-circuitage est refermée) est déterminée en fonction de l'état général du convertisseur catalytique.

Autrement formulé, la vanne de régulation est pilotée pour fermer la conduite de court-circuitage uniquement lorsque le convertisseur catalytique est amorcé, en s'adaptant à l'âge de ce dernier.

La vanne est en outre pilotée pour fermer la conduite de court-circuitage dès que le convertisseur catalytique est amorcé, de manière que le moteur puisse entrer au plus tôt dans un mode de fonctionnement normal, ce qui limite au mieux ses émissions polluantes.

D'autres caractéristiques avantageuses et non limitatives du procédé de pilotage conforme à l'invention sont les suivantes :
- ladite température est la température des gaz brûlés circulant dans la ligne d'échappement :
- ladite température est la température des gaz brûlés entrant dans le convertisseur catalytique ;
- à l'étape e), ladite vanne de régulation est pilotée pour, d'une part, rester à l'état ouvert tant que ladite valeur réelle est inférieure à ladite valeur d'amorçage, et pour, d'autre part, se fermer après que ladite valeur réelle a dépassé ladite valeur d'amorçage ;
- à l'étape b), ladite valeur d'amorçage est lue dans une cartographie de pilotage qui associe à chaque état de fonctionnement dudit convertisseur catalytique une valeur d'amorçage correspondante ;
- à l'étape b), ladite valeur d'amorçage est d'autant plus élevée que le convertisseur catalytique est use ;
- à l'étape a), le diagnostic est établi en mesurant la concentration en hydrocarbures imbrûlés dans les gaz brûlés circulant en aval du convertisseur catalytique ;
- à l'étape a), le diagnostic est établi au démarrage du moteur à combustion interne, lorsque ladite valeur réelle est comprise dans un intervalle prédéterminé ;
- lorsque le diagnostic établi à l'étape a) révèle un dysfonctionnement du convertisseur catalytique, ladite vanne de régulation est pilotée à l'étape e) en état fermé.

L'invention concerne également un moteur à combustion interne tel que défini en introduction, qui comporte un calculateur apte à mettre en oeuvre le procédé de pilotage précité.

### DESCRIPTION DETAILLE D'UN EXEMPLE DE REALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue schématique d'un moteur à combustion interne apte à mettre en oeuvre le procédé de pilotage selon l'invention ,
- la figure 2 est un logigramme illustrant l'étape a) du procédé de pilotage selon l'invention ;
- la figure 3 est un logigramme illustrant les étapes b) à e) du procédé de pilotage selon invention.

Dans la description, les termes « amont » et « aval seront utilisés suivant le sens de l'écoulement des gaz, depuis le point de prélèvement de l'air frais dans l'atmosphère jusqu'à la sortie des gaz brûlés dans l'atmosphère.

### Dispositif

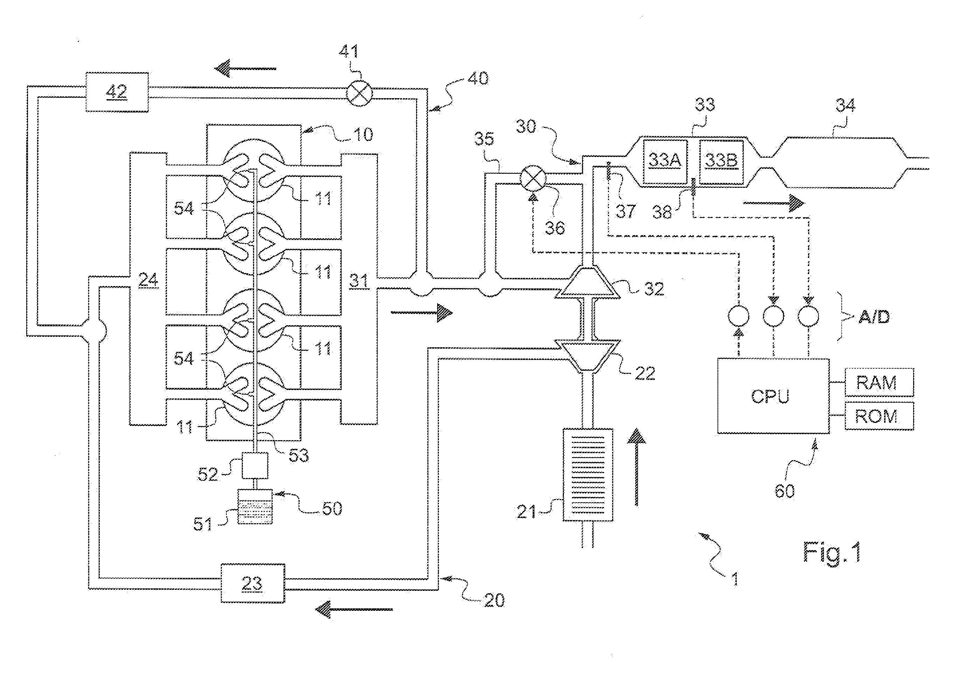

Sur la figure 1, on a représenté schématiquement un moteur à combustion interne 1 de véhicule automobile, qui comprend un bloc-moteur 10 pourvu d'un vilebrequin et de quatre pistons (non représentés) logés dans quatre cylindres 11.

Ce moteur est ici à allumage par compression (Diesel). Il pourrait également être à allumage commandé (Essence).

En amont des cylindres 11, le moteur à combustion interne 1 comporte une ligne d'admission 20 pourvue d'un filtre à air 21 qui filtre l'air frais prélevé dans l'atmosphère. Cette ligne d'admission 20 comporte en outre un compresseur 22 qui comprime l'air frais filtré par le filtre à air 21, ainsi qu'un refroidisseur d'air principal 23 qui refroidit cet air frais comprimé. La ligne d'admission 20 débouche dans un répartiteur d'air 24 qui amène l'air frais dans chacun des cylindres 11 du bloc-moteur 10.

En sortie des cylindres 11, le moteur à combustion interne 1 comporte une ligne d'échappement 30 de gaz brûlés. Cette ligne d'échappement 30 comporte un collecteur d'échappement 31 dans lequel débouchent les gaz qui ont été préalablement brûlés dans les cylindre 11. Cette ligne d'échappement 30 s'étend jusqu'à un silencieux d'échappement 34. La ligne d'échappement 30 comporte par ailleurs, entre le collecteur d'échappement 31 et le silencieux d'échappement 34, une turbine 32 qui est entraînée en rotation par le fieux de gaz brûlés pour actionner le compresseur 22, et un pot catalytique 33 de traitement des gaz brûles qui renferme ici un catalyseur d'oxydation 33A et un filtre à particules 33B.

Le catalyseur d'oxydation 33A peut comporter un faisceau de conduits en nid d'abeille dont les parois latérales sont recouvertes d'une fine couche d'éléments catalyseurs (alumine, cérine, platine...) qui déclenchent, lorsque la température T des gaz brûlés dépasse une valeur d'amorçage Ta, des réactions chimiques tendant à transformer les constituants les plus polluants des gaz brûlés (monoxyde de carbone, hydrocarbures imbrûlés, oxydes d'azote) en éléments moins polluants (eau et dioxyde de carbone).

La ligne d'échappement 30 comporte également une conduite de court-circuitage 35 de la turbine 32, qui prend naissance entre le collecteur d'échappement 31 et l'entrée de la turbine 32 et qui débouche entre la sortie de la turbine 32 et le pot catalytique 33. Cette conduite de court-circuitage 35 est équipée d'une vanne de régulation 36 du débit de gaz brûlés la traversant. Elle permet d'insuffler directement les gaz brûlés qui sortent du collecteur d'échappement 31 dans le pot catalytique 33, pour augmenter rapidement la température du catalyseur d'oxydation 33A.

Le moteur à combustion interne 1 comporte aussi ici une ligne de recirculation 40 des gaz brûlés, également appelée ligne EGR, qui prend naissance dans la ligne d'échappement 30, entre le collecteur d'échappement 31 et la turbine 32, et qui débouche dans la ligne d'admission 20, entre le refroidisseur d'air principal 23 et le répartiteur d'air 24. Cette ligne EGR 40 permet de prélever une partie des gaz brûlés circulant dans la ligne d'échappement 30 (appelés gaz EGR), pour la réinjecter dans les cylindres 11 afin de réduire les émissions polluantes du moteur. Cette ligne EGR 40 comporte une vanne EGR 41 de régulation du débit de gaz EGR et un refroidisseur EGR 42 pour refroidir les gaz EGR.

Le moteur à combustion interne 1 comporte par ailleurs une ligne d'injection 50 de carburant dans les cylindres 11. Cette ligne d'injection 50 comporte un réservoir de carburant 51 et une pompe d'injection 52 agencée pour prélever le carburant dans le réservoir 51 afin de l'amener sous pression dans un rail de distribution 53. Cette ligne d'injection 50 comporte en outre quatre injecteurs 54 dont les entrées communiquent avec le rail de distribution 53 et dont les sorties débouchent respectivement dans les quatre cylindres 11.

Pour piloter les différents organes du moteur à combustion interne 1 et notamment la vanne de régulation 36 de la conduite de court-circuitage 35, il est prévu un calculateur 60 comportant un processeur (CPU), une mémoire vive (RAM), une mémoire morte (ROM), des convertisseurs analogiques-numériques (A/D), et différentes interfaces d'entrée et de sortie.

Grâce à ses interfaces d'entrée, le calculateur 60 est adapté à recevoir des signaux d'entrée provenant de différents capteurs. Ces signaux d'entrée sont relatifs au fonctionnement du moteur (charge du moteur, régime du moteur, température d'eau, ...). Grâce à une sonde de température 37 implantée à l'entrée du pot catalytique 33, le calculateur 60 est en particulier apte à mesurer en continu la valeur réelle Tr de la température T des gaz brûlés entrant dans le catalyseur d'oxydation 33A. Grâce à un capteur de concentration 38 implanté à la sortie du catalyseur d'oxydation 33A, le calculateur 60 est également apte à mesurer en continu le taux d'hydrocarbures présents dans les gaz brûlés à la sortie du catalyseur d'oxydation 33A.

Dans sa mémoire vive, le calculateur 60 mémorise alors en particulier :
- la valeur Tr instantanée de la température des gaz brûlés entrant dans le catalyseur d'oxydation 33A, et
- la valeur Cr instantanée du taux d'hydrocarbures présents dans les gaz brûlés à la sortie du catalyseur d'oxydation 33A.

Grâce à une cartographie prédéterminée sur banc d'essais et mémorisée dans sa mémoire morte, le calculateur 60 est adapté à générer, pour chaque condition de fonctionnement du moteur, des signaux de sortie.

Enfin, grâce à ses interfaces de sortie, le contrôleur est adapté à transmettre ces signaux de sortie aux différents organes du moteur, notamment à la vanne de régulation 36 de la conduite de court-circuitage 35.

### Procédé

Classiquement, lorsque le conducteur du véhicule automobile met le contact, le calculateur 60 s'initie puis commande le démarrage du moteur. Il commande alors simultanément l'ouverture de la vanne de régulation 36.

Lorsque le moteur est démarré, l'air frais prélevé dans l'atmosphère par la ligne d'admission 20 est filtré par le filtre à air 21. passe au travers du compresseur 22, puis est refroidi par le refroidisseur d'air principal 23 avant d'être brûlés par le carburant dans les cylindres 11,

A leur sortie des cylindres 11, une première partie des gaz brûlés, les gaz EGR, est réinjectée dans la ligne d'admission 20. La partie restante est directement conduite dans le pot catalytique 33, en court-circuitant la turbine 32, pour y être traitée par le catalyseur d'oxydation 33A et pour y être filtrée par le filtre à particules 33B. Ces gaz brûlés traités et filtrés sont ensuite rejetés dans l'atmosphère via le silencieux d'échappement 34.

Au démarrage du moteur, tant que la température du catalyseur d'oxydation 33A n'a pas atteint sa valeur d'amorçage Ta, les gaz brûlés ne sont pas correctement traités, si bien que les émissions polluantes du moteur sont importantes. C'est la raison pour laquelle il convient d'amorcer le catalyseur d'oxydation 33A le plus rapidement possible en court-circuitant la turbine 32. Une fois le catalyseur amorcé, les gaz brûlés sont correctement traités par celui-ci mais le moteur présente un rendement réduit du fait du court-circuitage de la turbine 32. Il convient donc de fermer au plus tôt cette conduite de court-circuitage 35.

Pour fermer la conduite de court-circuitage 35 dès que le catalyseur d'oxydation 33A est amorcé, le calculateur 60 met selon l'invention en oeuvre un procédé de pilotage de la vanne de régulation 36 comprenant les cinq étapes suivantes :
- une étape a) de réalisation d'un diagnostic de l'état de fonctionnement EF du convertisseur catalytique 33A,
- une étape b) de déduction, en fonction du diagnostic réalisé, de la valeur de température d'amorçage Ta du convertisseur catalytique 33A.
- une étape c) de mesure de la valeur réelle Tr de la température T des gaz brûlés,
- une étape d) de comparaison de ladite valeur d'amorçage Ta et de ladite valeur réelle Tr, et
- une étape e) de pilotage de la vanne de régulation 36 en fonction du résultat de la comparaison effectuée à l'étape d).

En pratique, les étapes a) et c) sont mises en oeuvre au cours de deux phases de fonctionnement distinctes du moteur. Le diagnostic de l'étape a) est plus précisément établi au cours d'un premier démarrage du moteur, tandis que les étapes c) à e) sont mises en oeuvre au cours d'un démarrage subséquent du moteur, en prenant en considération le résultat du diagnostic précédemment établi.

L'étape a) de diagnostic peut donc être mise en oeuvre soit à chaque démarrage du moteur afin que son résultat soit pris en considération au cours du démarrage suivant du moteur, soit à intervalles réguliers afin que son résultat soit pris en considération au cours de plusieurs démarrages successifs.

Le procédé de pilotage du moteur est qui qu'il en soit mis en oeuvre de la manière suivante.

### Etape a)

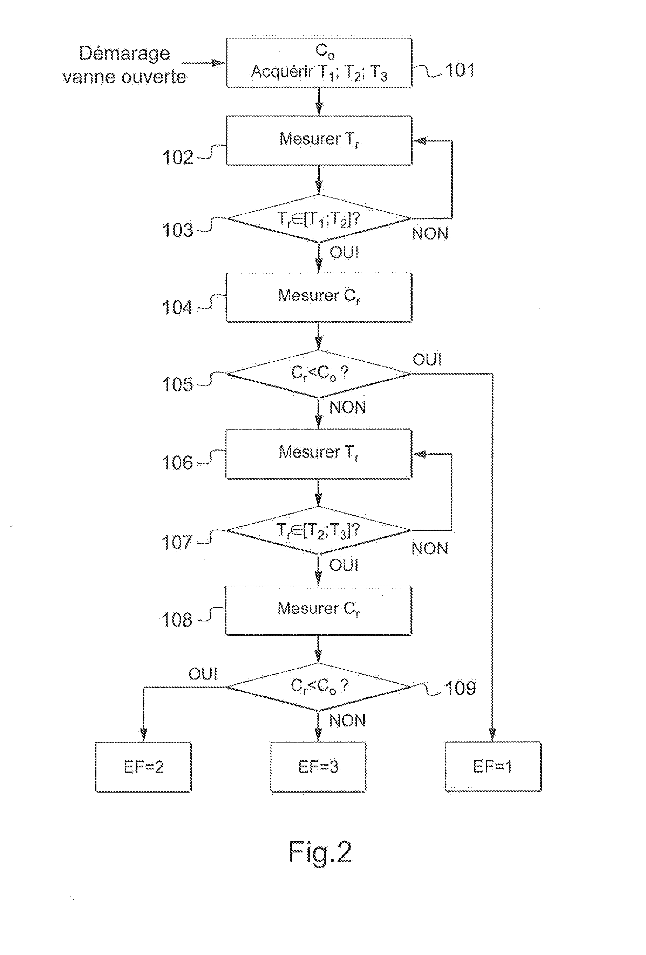

Comme le montre la figure 2, à l'étape a), le calculateur 60 acquiert au cours d'une première opération 101 une valeur seuil C_{D} de concentration, ainsi que les trois bornes T₁. T₂, T₃ de deux intervalles de températures [T₁, T_{2]} et [T₂, T₃].

La valeur seuil C₀ et les bornes T₁, T₂, T₃ sont des constantes déterminées sur banc d'essais et mémorisées dans la mémoire morte du calculateur 60.

La valeur seuil C₀ correspond en l'espèce à une concentration d'hydrocarbures imbrûlés moyenne, qui est inférieure à la concentration d'hydrocarbures qui pourra être mesurée par le capteur de concentration 38 lorsque le catalyseur d'oxydation 33A ne sera pas encore amorcé, et qui est supérieure à la concentration d'hydrocarbures qui pourra être mesurée lorsque le catalyseur d'oxydation 33A sera définitivement amorcé.

Les bornes T₁, T₂, T₃ correspondent quant à elles respectivement aux valeurs d'amorçage d'un catalyseur d'oxydation neuf, légèrement usagé et fortement usagé. On comprend donc qu'au cours de la durée de vie du catalyseur d'oxydation 33A, sa valeur de température d'amorçage Ta va varier depuis la borne T₁ jusqu'au-delà de la borne T₃.

Au cours d'une seconde opération 102, le calculateur 60 détermine au moyen de la sonde de température 37 la valeur réelle Tr de la température T des gaz brûlés entrant dans le pot catalytique 33,

Au cours d'une troisième opération 103, le calculateur 60 détermine grâce aux valeurs recueillies précédemment si la valeur réelle Tr est comprise dans le premier intervalle de températures [T₁, T₂].

Si tel n'est pas le cas, le calculateur 60 boucle sur l'étape 102.

En revanche, dès que la valeur réelle Tr dépasse la borne T₁, le calculateur 60 procède à une quatrième opération 104 consistant à mesurer, via le capteur de concentration 38, la valeur Cr de la concentration d'hydrocarbures présents dans les gaz brûlés sortant du catalyseur d'oxydation 33A.

Au cours d'une cinquième opération 105, le calculateur 60 compare cette valeur réelle Cr avec la valeur seuil C₀.

Si la valeur réelle Cr est inférieure à la valeur seuil C₀, ce qui signifie que le catalyseur d'oxydation 33A est déjà amorcé et qu'il est donc en bon état, le calculateur 60 assigne la valeur 1 à une donnée EF qui est relative à l'état de fonctionnement du catalyseur d'oxydation 33A et qui est mémorisée dans la mémoire vive du calculateur 60.

En revanche, si la valeur réelle Cr est supérieure à la valeur seuil C₀, ce qui signifie que le catalyseur d'oxydation 33A n'est pas encore amorcé et qu'il est donc soit légèrement usagé soit fortement usagé, le calculateur 60 mesure au cours d'une sixième opération 106 la valeur réelle Tr instantanée de la température T des gaz brûlés entrant dans le pot catalytique 33.

Au cours d'une septième opération 107, le calculateur 60 détermine si la valeur réelle Tr est comprise dans le second intervalle de températures [T₂, T₃].

Tant que tel n'est pas le cas, le calculateur 60 boucle sur l'étape 106.

En revanche, dès que la valeur réelle Tr dépasse la borne T₂, le calculateur 60 procède à une huitième opération 108 consistant à déterminer la valeur réelle Cr instantanée de la concentration d'hydrocarbures présents dans les gaz brûlées sortant du catalyseur d'oxydation 33A.

Au cours d'une neuvième opération 109, le calculateur 60 compare cette valeur réelle Cr avec la valeur seuil C₀.

Si la valeur réelle Cr est inférieure à la valeur seuil C₀, ce qui signifie que le catalyseur d'oxydation 33A est amorcé et qu'il est donc seulement légèrement usagé, le calculateur 60 assigne la valeur 2 à la donnée EF.

En revanche, si la valeur réelle Cr est supérieure à la valeur seuil C₀, ce qui signifie que le catalyseur d'oxydation 33A n'est pas encore amorcé et qu'il est donc fortement usagé, le calculateur 60 assigne la valeur 3 à la donnée EF.

### Etape b)

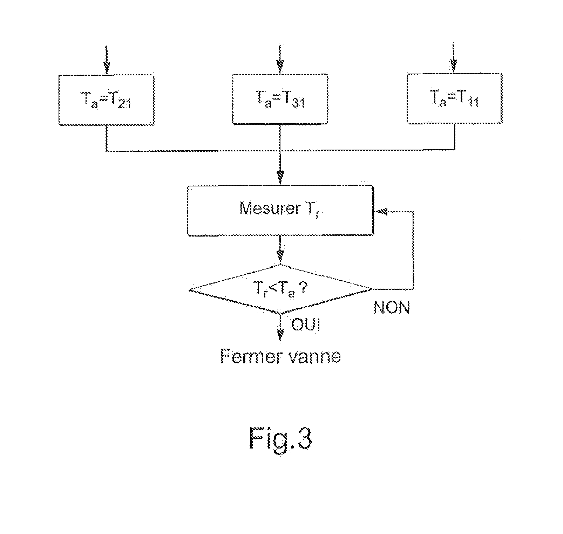

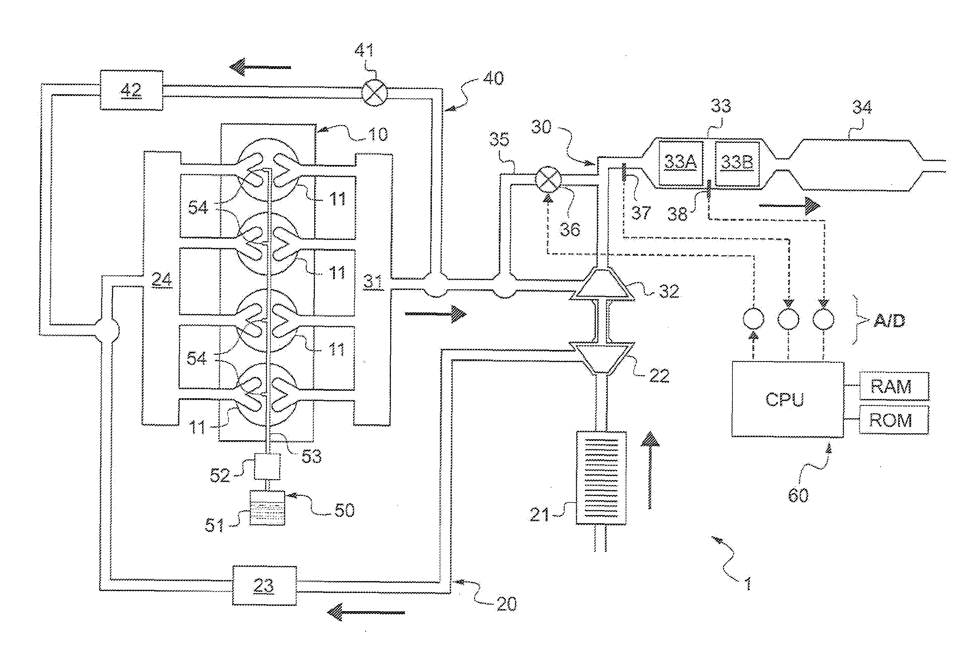

Comme le montre la figure 3, au cours de l'étape b), le calculateur 60 déduit, en fonction de la valeur de la donnée EF, la valeur de température d'amorçage Ta du convertisseur catalytique 33A.

Pour cela, le calculateur 60 lit cette valeur de température d'amorçage Ta dans une cartographie mémorisée dans sa mémoire morte, qui associe à chaque valeur 1, 2 ou 3 de la donnée EF une valeur de température d'amorçage T₁₁, T₂₁, T₃₁ correspondante.

Ces valeurs d'amorçage T₁₁, T₂₁, T₃₁ sont d'autant plus élevées que la valeur de la donnée EF est grande, Elles sont respectivement choisies inférieures ou égales aux bornes T₁, T₂, T₃.

### Etapes c) à e)

Au cours des étapes c) à e), le calculateur 60 détermine la valeur réelle Tr instantanée de la température T des gaz brûlés entrant dans le pot catalytique 33, au moyen de la sonde de température 37.

Il compare en continu la valeur réelle Tr mesurée avec la valeur de température d'amorçage Ta déduite à l'étape b).

Tant que la valeur réelle Tr de la température T reste inférieure à la valeur de température d'amorçage Ta, ce qui signifie que le catalyseur d'oxydation 33A n'est pas encore amorcé, la vanne de régulation 36 est pilotée pour rester en état ouvert de manière que les gaz brûlés réchauffent au plus vite le catalyseur d'oxydation 33A.

Puis, lorsque la valeur réelle Tr de la température T dépasse la valeur de température d'amorçage Ta, ce qui signifie que le catalyseur d'oxydation 33A est amorcé, la vanne de régulation 36 est pilotée en état fermé de manière que le moteur entre dans un mode de fonctionnement anormal dans lequel les gaz brûlés passent au travers de la turbine 32.

La présente invention n'est nullement limitée au mode de réalisation décrit et représenté, mais l'homme du métier saura y apporter toute variante conforme à son esprit.

On pourra en particulier prévoir qu'après cette phase de démarrage, le calculateur continue de mesurer la valeur réelle de la température des gaz brûlés, Ainsi, si cette valeur réelle passe sous un seuil de température signifiant que le moteur entre à nouveau dans une phase froide, le calculateur pourra piloter la vanne de régulation pour qu'elle ouvre à nouveau la conduite de court-circuitage afin de conserver le catalyseur d'oxydation à l'état amorcé.

On pourra également prévoir de discrétiser l'intervalle de températures [T₁ ; T₃] considéré avec un plus grand nombre de bornes intermédiaires, pour obtenir un diagnostic plus précis de l'état de fonctionnement du catalyseur d'oxydation.

On pourra aussi, pour réaliser le diagnostic du catalyseur d'oxydation, considérer un intervalle de températures [T₃ T₄] supplémentaire dans lequel tout catalyseur d'oxydation en état de fonctionnement est amorcé. Grâce à cet intervalle, le calculateur pourra vérifier, en mesurant la valeur de la concentration d'hydrocarbures présents dans les gaz brûlés et en la comparant à la valeur seuil C₀, que le catalyseur d'oxydation est en état de fonctionnement. Ainsi, s'il détecte que la valeur mesurée est supérieure à la valeur seuil, ce qui signifie que le catalyseur d'oxydation ou que l'une des sondes présente un dysfonctionnement quelconque, il pourra piloter la vanne de régulation de manière à fermer la conduite de court-circultage jusqu'à temps que la sonde ou le catalyseur déficient soit réparé ou remplacé.

Selon une autre variante, le diagnostic établi à l'étape a) pourra être réalisé différemment, par exemple en mesurant la concentration d'un autre des éléments polluants contenus dans les gaz brûlés. Il pourra également être réalisé en fonction, non pas de la concentration d'éléments polluants contenus dans les gaz brûlés, mais plutôt en fonction du nombre de démarrages effectués par le moteur et/ou du nombre de kilomètres parcourus par le véhicule.

Encore en variante, à l'étape e) de pilotage, la vanne de régulation pourra être pilotée non pas selon un mode tout ou rien (ouvert/fermé). mais plutôt variablement en fonction du résultat de la comparaison effectuée à l'étape d). Ainsi, on pourra prévoir que la vanne de régulation se referme non pas brutalement dès que la valeur réelle de la température des gaz brûlés dépasse la valeur de température d'amorçage, mais qu'elle se referme au contraire continûment ou par paliers en fonction de l'écart entre ces deux valeurs.

## Revendications

1. Procédé de pilotage d'un moteur à combustion interne (1), ce moteur à combustion Même (1) comportant une ligne d'échappement (30) de gaz brûlés équipée d'une turbine (32) suivie d'un convertisseur catalytique (33A) et, en parallèle de ladite turbine (32), d'une conduite de court-circuitage (35) de ladite turbine (32) munie d'une vanne de régulation (36) du débit de gaz brûlés circulant dans ladite conduite de court-circuitage (35), **caractérisé en ce qu'**il comporte des étapes consistant à :
a) réaliser un diagnostic de l'état de fonctionnement (EF) dudit convertisseur catalytique (33A),
b) déduire dudit diagnostic une valeur d'amorçage (Ta) d'une température (T) à partir de laquelle ledit convertisseur catalytique (33A) est amorcé,
c) mesurer une valeur réelle (Tr) de ladite température (T),
d) comparer ladite valeur réelle (Tr) à ladite valeur d'amorçage (Ta), et
e) piloter l'ouverture et/ou la fermeture de ladite vanne de régulation (36) en fonction du résultat de la comparaison effectuée à l'étape d).

2. Procédé de pilotage selon la revendication précédente, dans lequel ladite température (T) est la température des gaz brûlés circulant dans la ligne d'échappement (30).

3. Procédé de pilotage selon la revendication précédente, dans lequel ladite température (T) est la température des gaz brûlés entrant dans le convertisseur catalytique (33A).

4. Procédé de pilotage selon l'une des revendications précédentes, dans lequel à l'étape e), ladite vanne de régulation (36) est pilotée pour, d'une part, rester à l'état ouvert tant que ladite valeur réelle (Tr) est inférieure à ladite valeur d'amorçage (Ta), et pour, d'autre part, se fermer après que ladite valeur réelle (Tr) a dépassé ladite valeur d'amorçage (Ta).

5. Procédé de pilotage selon l'une des revendications précédentes, dans lequel à l'étape b), ladite valeur d'amorçage (Ta) est lue dans une cartographie de pilotage qui associe à chaque état de fonctionnement (EF) dudit convertisseur catalytique (33A) une valeur d'amorçage (Ta) correspondante.

6. Procédé de pilotage selon l'une des revendications précédentes, dans lequel à l'étape b), ladite valeur d'amorçage (Ta) est d'autant plus grande que le convertisseur catalytique (33A) est usé.

7. Procédé de pilotage selon l'une des revendications précédentes, dans lequel à l'étape a), le diagnostic est établi en mesurant la concentration (Cr) d'hydrocarbures imbrûlés dans les gaz brûlés circulant en aval du convertisseur catalytique (33A).

8. Procédé de pilotage selon la revendication précédente, dans lequel à l'étape a), le diagnostic est établi au démarrage du moteur à combustion interne (1), lorsque ladite valeur réelle (Tr) est comprise dans un intervalle prédéterminé.

9. Procédé de pilotage selon l'une des revendications précédentes, dans lequel lorsque le diagnostic établi à l'étape a) révèle un dysfonctionnement du convertisseur catalytique (33A), ladite vanne de régulation (36) est pilotée à l'étape e) en état fermé.

10. Moteur à combustion interne comportant une ligne d'échappement (30) de gaz brûlés équipée d'une turbine (32) suivie d'un convertisseur catalytique (33A) et, en parallèle de ladite turbine (32), d'une conduite de court-circuitage (35) de ladite turbine (32) munie d'une vanne de régulation (36) du débit de gaz brûlés circulant dans ladite conduite de court-circuitage (35), **caractérisé en ce qu'**il comporte un calculateur (60) adapté à mettre en oeuvre un procédé de pilotage selon l'une des revendications précédentes.
